Europäisches Patentamt

European Patent Office

Office européen des brevets

(11) Numéro de publication: **0 172 766**
A1

# (12) DEMANDE DE BREVET EUROPEEN

(21) Numéro de dépôt: **85401500.5**

(22) Date de dépôt: **19.07.85**

(51) Int. Cl.⁴: **G 01 B 7/14**

(30) Priorité: **20.07.84 FR 8411566**

(43) Date de publication de la demande:
**26.02.86 Bulletin 86/9**

(84) Etats contractants désignés:
**DE GB**

(71) Demandeur: **OFFICE NATIONAL D'ETUDES ET DE RECHERCHES AEROSPATIALES (O.N.E.R.A.)**
**29, avenue de la Division Leclerc**
**F-92320 Chatillon(FR)**

(72) Inventeur: **Paulon, Jacques**
**10, avenue Garnier**
**F-91300 Massy(FR)**

(72) Inventeur: **Fournier, Jean-Claude**
**1, rue des Tertres**
**F-92220 Bagneux(FR)**

(74) Mandataire: **Gorree, Jean-Michel et al,**
**Cabinet Plasseraud 84, rue d'Amsterdam**
**F-75009 Paris(FR)**

(54) **Procédé et appareil pour effectuer la mesure dynamique, sur une machine tournante en fonctionnement, du jeu entre les faces en regard du rotor et du stator de cette machine.**

(57) Dans un appareil pour effectuer la mesure dynamique, sur une machine tournante en fonctionnement, du jeu $d$ entre les faces en regard du rotor (5) et du stator (4) de cette machine, un capteur de proximité (1) du type capacitif monté dans le stator comprend un manchon métallique externe (6), un manchon métallique interne (12) isolé du précédent, et un élément sensible métallique (16) intérieur et coaxial au précédent et isolé de lui, ces trois organes étant respectivement connectés à la gaine externe (20), à la gaine interne (21) et à l'âme (22) d'un câble triaxial (11) de liaison avec un dispositif de commande et de traitement des signaux.

EP 0 172 766 A1

./...

FIG.1.

1

<u>Procédé et appareil pour effectuer la mesure dynamique, sur une machine tournante en fonctionnement, du jeu entre les faces en regard du rotor et du stator de cette machine.</u>

La présente invention concerne, d'une part, un procédé pour effectuer la mesure dynamique, sur une machine tournante en fonctionnement, du jeu entre les faces en regard du rotor et du stator de cette machine, notamment du jeu entre l'extrémité d'une aube tournante et le carter d'une turbomachine, ce procédé étant basé sur la détection de la charge d'un condensateur constitué par une surface conductrice d'un capteur fixé dans le stator en regard du rotor et une surface conductrice du rotor susceptible d'être située en regard de la précédente et, d'autre part, un appareil pour effectuer la mesure dynamique, sur une machine tournante en fonctionnement, du jeu entre les faces en regard du rotor et du stator de cette machine, notamment du jeu entre l'extrémité d'une aube tournante et le carter d'une turbo-machine, cet appareil comportant un capteur de proximité du type capacitif disposé dans le stator dans une position fixe prédéterminée vis-à-vis du rotor et connecté électriquement à un dispositif électronique de commande et de traitement du signal électrique fourni par le capteur.

Le jeu régnant entre les faces en regard du rotor et du stator d'une machine tournante est un paramètre important qui influe notablement sur les performances de la machine, quel que soit le type de machine tournante considéré ; c'est le cas en particulier du jeu entre l'extrémité des aubes et le carter dans les compresseurs et les turbines.

Il est donc d'un intérêt primordial pour les motoristes de connaître avec une grande précision l'évolution de ce jeu sur la totalité de la circonférence de l'interface entre rotor et stator, sur une machine réelle en fonctionnement, en régime permanent ou en régime transitoire.

Pour effectuer la mesure dynamique de ce jeu, on utilise des appareils dits "capteurs de proximité" dont le fonctionnement est basé sur des phénomènes électriques et/ou optiques.

L'invention s'intéresse tout particulièrement à une mesure basée sur des phénomènes électriques de type capacitif consistant à mesurer la charge du condensateur constitué par une surface conductrice d'un capteur fixé dans le stator en regard du rotor et une surface conductrice du rotor susceptible d'être située en regard de la précédente au cours de la rotation du rotor par rapport au stator.

Un capteur capacitif connu de ce type, décrit dans le brevet US 4 063 167, comporte deux électrodes disposées côte à côte, ce qui conduit à une surface frontale relativement importante qui doit être mise en forme, c'est-à-dire avoir une courbure correspondant à la courbure de la surface du stator dans lequel il est intégré.

Ce capteur connu présente donc, l'inconvénient important d'être encombrant, ce qui limite sa possibilité de mise en place et donc d'utilisation ; la courbure donnée à la surface frontale du capteur empêche son installation dans un autre stator possédant un rayon de courbure différent ; l'isolement électrique des électrodes est effectué à l'aide d'une résine époxyde ce qui limite son domaine d'utilisation en température, et empêche en particulier son emploi dans les compresseurs et les turbines, dans lesquelles règnent des températures très élevées ; enfin, ce brevet ne prévoit pas de circuits ou de systèmes de compensation permettant de s'affranchir des erreurs inhérentes à l'appareil, en particulier pour s'affranchir des dérives en température qui peuvent s'avérer déterminantes lorsque les mesures sont effectuées dans une ambiance à température très élevée (cas des turbines).

L'invention a donc essentiellement pour but de proposer un procédé et un appareil de mesure qui ne possèdent pas les inconvénients de l'appareil connu et qui permettent de mesurer la capacité vraie  du condensateur formé par la surface sensible d'un capteur fixé dans le stator et la surface conductrice du rotor en rotation(et donc la valeur très précise du jeu entre rotor et stator)en s'affranchissant des erreurs inhérentes à l'appareil  et aux conditions de la mesure, même lorsque la température ambiante est très élevée.

A ces fins, un premier aspect de l'invention porte sur un procédé tel qu'indiqué plus haut, qui se caractérise en ce qu'il comprend les étapes qui suivent :

a) on applique sur la surface de l'élément sensible du capteur      une tension de polarisation,

b) on mesure       le courant de charge du condensateur constitué par lesdites deux surfaces du rotor et du stator lorsque la surface du rotor vient à passer en regard de la surface du capteur fixé dans le stator et on détecte la fin de la charge du condensateur,

c) on détecte        l'instant du retour à zéro dudit courant de charge, on annule           la tension de polarisation du capteur et on provoque la décharge du condensateur,

d) on mesure        l'amplitude maximale du courant de décharge du condensateur qui est représentative de la distance séparant les deux surfaces en regard,

e) et on en déduit        la distance séparant les deux surfaces en regard du rotor et du stator.

Une application préférée de ce procédé qui concerne le cas où le rotor de la machine tournante comporte une alternance d'encoches et de parties saillantes, la profondeur des encoches (considérée par rapport à l'extrémité libre des parties saillantes) étant relativement grande par rapport à la distance à mesurer séparant l'extrémité libre des parties saillantes et le stator. Selon l'invention, on prévoit alors qu'entre les étapes d) et e) on détermine successivement les charges du condensateur respectivement lorsqu'une partie saillante puis une encoche du rotor sont situées en regard de la surface du capteur fixé dans le stator,

en ce qu'on effectue la différence entre les deux valeurs détectées,

et en ce qu'on considère ladite différence comme étant la capacité vraie du condensateur formé par l'extrémité de la partie saillante du rotor et la surface du capteur fixé dans le stator.

Grâce à ces dispositions, on s'affranchit des erreurs introduites par l'appareil lors de la mesure et du traitement des signaux lorsque la profondeur des encoches est suffisamment grande pour que la capacité correspondante puisse être considérée comme nulle.

Un second aspect de l'invention porte sur un appareil tel qu'indiqué plus haut, qui se caractérise en ce que le capteur comprend :

- un manchon externe constitué en un matériau électriquement conducteur, fixé dans le stator,

- un manchon interne constitué en un matériau électriquement conducteur et s'étendant coaxialement à l'intérieur du manchon externe en étant électriquement isolé de celui-ci,

- et un élément sensible constitué en un matériau électriquement conducteur et s'étendant coaxialement à l'intérieur du manchon interne en étant électriquement isolé de celui-ci, les extrémités antérieures du manchon externe, du manchon interne et de l'élément sensible étant alignées entre elles et affleurant la face du stator tournée vers le rotor,

le manchon externe, le manchon interne et l'élément sensible étant respectivement connectés à une gaine externe électriquement conductrice, à une gaine interne électriquement conductrice isolée de la précédente, et à une âme électriquement conductrice, isolée de la précédente, d'un

5

câble triaxial de liaison avec le dispositif de commande et de traitement du signal.

Cette structure à trois organes conducteurs concentriques, dont le manchon externe est destiné à être relié à la masse pour constituer un blindage et dont le manchon interne et l'élément sensible sont destinés à être portés au même potentiel, assure une capacité parasite minimale entre les organes conducteurs en regard quelles que soient les variantes dimensionnelles desdits organes en fonction de la température; l'élément sensible central possède donc un potentiel parfaitement déterminé indépendamment des conditions ambiantes. La connexion à la masse du manchon externe assure, en outre, la liaison électrique à l'armature du condensateur constituée par la surface du rotor en regard du capteur.

Dans un mode de réalisation préféré, le manchon interne et l'élément sensible sont chacun constitués de deux parties distantes l'une de l'autre axialement; la partie postérieure du manchon interne et la partie postérieure de l'élément sensible sont respectivement connectées à la gaine interne et à l'âme du câble triaxial; la partie antérieure du manchon interne et la partie antérieure de l'élément sensible ont leurs faces antérieures respectives affleurant la face susmentionnée du stator; les parties postérieure et antérieure du manchon interne sont réunies l'une à l'autre par un soufflet tubulaire et les parties postérieure et antérieure de l'élément sensible sont réunies l'une à l'autre par un soufflet tubulaire, ces deux soufflets étant constitués en un matériau électriquement conducteur et étant partiellement comprimés en position de montage. Ce montage présente l'intérêt que les parties antérieures du manchon intérieur et de l'élément sensible sont repoussées vers l'avant, en appui sur leurs butées respectives, sous l'action élastique des soufflets précomprimés, tandis que leurs parties postérieures respectives sont libres de se dilater quelles que soient les conditions de températures ambiantes, lesdits soufflets assurant en outre la continuité électrique entre les parties antérieures et postérieures respectives.

'6

Avantageusement, des manchons isolants sont interposés, d'une part, entre le manchon externe et la partie antérieure du manchon interne et, d'autre part, entre les parties antérieures du manchon interne et de l'élément sensible.

Pour obtenir un positionnement fiable et précis des organes du capteur par rapport à la surface du stator, les différentes pièces emboîtées les unes dans les autres (manchon externe, manchons isolants, parties antérieures du manchon interne et de l'élément sensible) possèdent, vers leur extrémité antérieure, une ou des surfaces tronconiques de portée mutuelle servant de butée en direction de l'avant. De même, pour faciliter la mise en place du capteur dans le stator, le manchon externe possède un épaulement périphérique sur sa surface extérieure apte à coopérer avec un épaulement complémentaire du stator servant de butée en direction de l'avant.

De façon avantageuse, les assemblages entre les pièces constituées en un matériau électriquement conducteur sont réalisés par soudure sous atmosphère de gaz rare (sous argon notamment) ou par bombardement électronique, de façon à résister aux températures élevées rencontrées dans les turbines.

Toujours dans le but de réduire dans toute la mesure du possible les dérives entraînées par les variations dimensionnelles dues à des variations importantes de température, les matériaux électriquement conducteurs ou isolants constitutifs des pièces de l'appareil possèdent des coefficients de dilatation thermique aussi voisins que possible.

Dans une conception particulière de l'appareil de l'invention utilisant un capteur tel qu'indiqué ci-dessus, le dispositif de commande et de traitement du signal fourni par le capteur comprend :

A) un circuit de traitement du signal fourni par le capteur comportant :

a) un circuit de détection du maximum du courant de décharge dans le capteur, ce circuit étant connecté à l'élément sensible du capteur,

b) un circuit calculateur, connecté au précédent, pour déterminer la distance entre le capteur et une zone prédéterminée de la surface du rotor à partir de ladite valeur maximale détectée du courant de décharge,

c) et un circuit d'affichage, connecté au précédent, pour afficher la distance détectée ;

et

B) un circuit de commande du capteur comprenant :

a) un circuit de détection du courant de charge dans le capteur, connecté audit capteur,

b) un circuit de détection du passage à zéro du courant de charge, connecté au précédent,

c) un circuit de détection de la vitesse de rotation du rotor,

d) un circuit de détection d'intervalle entre les zones prédéterminées de la surface du rotor,

e) un circuit de polarisation dont les entrées sont connectées aux trois circuits précédents, pour interrompre la tension de polarisation du capteur à partir du passage à zéro du courant de charge pour une durée au moins égale au temps de décharge du condensateur, et

f) un amplificateur connecté au circuit précédent possédant une sortie à basse impédance raccordée à l'élément sensible du capteur pour fournir à celui-ci la tension de polarisation appropriée.

Enfin, dans le cas où le rotor de la machine tournante comporte une alternance d'encoches et de parties saillantes (zones prédéterminées susmentionnées) la profondeur des encoches (considérées par rapport à l'extrémité libre des parties saillantes) étant relativement grande par rapport à la distance à mesurer séparant l'extrémité libre des parties saillantes et le stator, on prévoit alors avantageusement que le circuit de traitement du signal fourni par le capteur comporte en outre un circuit séparateur de signaux, connecté au circuit de détection du maximum du courant de décharge dans le capteur, pour séparer les signaux électriques correspondant, d'une part, à la décharge du condensateur formé par l'élément sensible du capteur et l'extrémité d'une partie saillante du rotor et, d'autre part, à la décharge du condensateur formé par l'élément sensible du capteur et le fond d'une encoche du rotor,et que le circuit calculateur est connecté à la sortie du circuit séparateur, pour déterminer la différence entre les deux valeurs maximales des courants de décharge correspondant respectivement à une partie saillante et à une encoche du rotor, et pour déterminer la distance entre le capteur et la partie saillante du rotor à partir de la susdite différence.

L'invention sera mieux comprise à la lecture de la description détaillée qui suit d'un mode de réalisation préféré, donné uniquement à titre d'exemple nullement limitatif, dans lequel on se réfère aux dessins annexés sur lesquels :

- la figure 1 est une vue de côté en coupe axiale d'un capteur capacitif agencé conformément à l'invention ;

- la figure 2 est un schéma-bloc illustrant le mode de fonctionnement d'un appareil de mesure conforme à l'invention faisant usage du capteur de la fig. 1 ;

- la figure 3 est un diagramme montrant la forme des signaux en certains points de l'appareil de la fig. 2 et

- les figures 4 à 6 sont des schémas électriques simplifiés correspondant à des modes de réalisation préférés de certains circuits de l'appareil de la fig. 2.

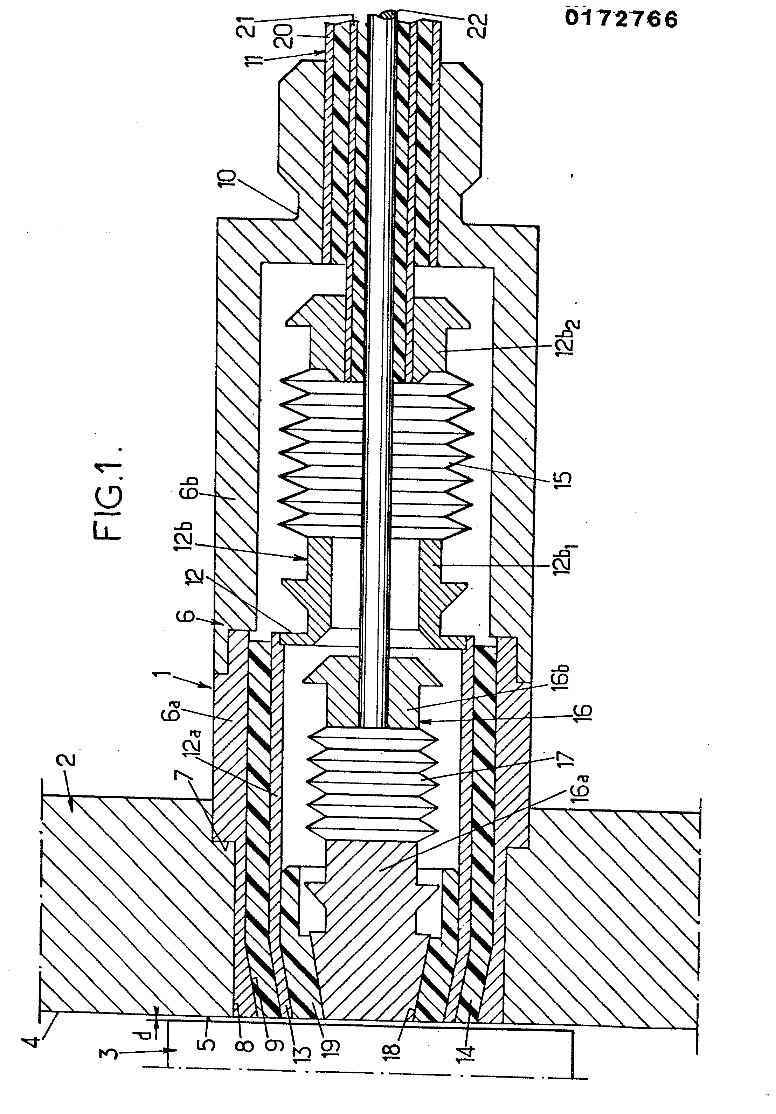

En se référant tout d'abord à la figure 1, un capteur capacitif 1 conforme à l'invention est représenté, en coupe axiale, en position de montage dans un stator 2, en regard d'un rotor 3. Bien qu'il ne s'agisse pas là de la seule utilisation possible de l'appareil de l'invention, on suppose que la machine tournante est une turbine : le capteur 1 est alors monté dans le carter 2 (constituant le stator) et le rotor est constitué par une roue à aubes 3 tournant à l'intérieur du carter. L'appareil de l'invention est alors destiné à déterminer l'intervalle d entre les faces en regard du stator et du rotor, autrement dit entre la face interne 4 du carter 2 et l'extrémité 5 de chaque aube 3, de façon dynamique alors que la turbine est en cours de fonctionnement.

Le capteur 1 se présente sous forme d'un organe allongé, comportant :

- un manchon externe 6, en un matériau électriquement conducteur (métallique), muni d'un épaulement extérieur 7 prenant appui contre un épaulement complémentaire prévu sur la face d'un évidement 8 ouvert dans le carter 2 pour recevoir et supporter le capteur ; vers son extrémité antérieure (c'est-à-dire située du côté du rotor), le manchon externe 6 possède une face intérieure 9 tronconique à conicité tournée vers l'avant, le reste de la surface intérieure du manchon étant sensiblement cylindrique de révolution ; la partie arrière du capteur comporte un rétrécissement 10 percé axialement pour le passage du câble 11 de liaison avec le reste de l'appareil ; pour autoriser le montage du capteur, le manchon externe 6 est constitué en deux parties, l'une antérieure 6a et l'autre postérieure 6b, assemblées l'une à l'autre par soudure en fin de montage,

- un manchon interne 12, constitué en un matériau électriquement conducteur (métallique) et s'étendant coaxialement à l'intérieur du manchon externe 6 ; le manchon interne 12 est lui aussi constitué en deux parties, l'une antérieure 12a et l'autre postérieure 12b, assemblées l'une à l'autre par soudure ; la partie antérieure 12a possède une extrémité avant 13 tronconique de révolution de même conicité que la face intérieure 9 du manchon 6, tandis que le reste de la partie antérieure 12a est cylindrique de révolution ; la longueur de la partie antérieure 12a du manchon interne 12 est pratiquement la même que celle de la partie antérieure

.10

6a du manchon externe 6, et entre leurs faces en regard respectives est interposé un manchon de blocage et d'entretoisement 14 constitué en un matériau électriquement isolant ; la partie postérieure 12b du manchon interne 12 est elle-même constituée d'une portion $12b_1$, soudée à la partie antérieure 12a et d'une partie $12b_2$ cylindriques de révolution, distantes l'une de l'autre axialement et connectées l'une à l'autre, mécaniquement et électriquement, par un soufflet métallique 15 partiellement comprimé ;

- enfin un élément sensible 16 constitué en un matériau électriquement conducteur (métallique) et s'étendant coaxialement à l'intérieur du manchon interne 12 et, plus précisément, à l'intérieur de la partie antérieure 12a du manchon 12 ; l'élément sensible 16 est lui aussi constitué en deux parties, l'une antérieure 16a et l'autre postérieure 16b distantes l'une de l'autre axialement et connectées l'une à l'autre, mécaniquement et électriquement, par un soufflet métallique 17 partiellement comprimé ; la partie antérieure 16a possède une extrémité avant 18 de forme tronconique ayant même conicité que l'extrémité avant 13 du manchon interne 12 et que l'extrémité avant 9 de la face intérieure du manchon externe 6 ; entre les faces en regard des parties antérieures 12a et 16a du manchon interne 12 et de l'élément sensible 16, respectivement, est interposé un manchon de blocage et d'entretoisement 19 constitué en un matériau électriquement isolant.

On remarquera que les extrémités avant du manchon externe 6, du manchon interne 12 et de l'élément sensible 16 sont toutes rigoureusement alignées entre elles et sont maintenues dans cette position, quelles que soient les dilatations (conjuguées ou différentielles) que subissent les organes, sous l'action des forces que les soufflets 15 et 17 exercent vers l'avant sur les parties antérieures 12a et 16a, respectivement, qui sont ainsi maintenues en appui sur les portées coniques de blocage.

11

Les liaisons entre les différentes pièces métalliques peuvent être réalisées par soudure sous argon ou par bombardement électronique si des températures élevées règnent au sein de la machine en fonctionnement (cas des turbines par exemple).

Les matériaux constitutifs des différents organes du capteur sont choisis parmi les métaux et isolants électriques possédant des coefficients de dilatation thermique aussi voisins que possible : par exemple les parties métalliques sont en alliage "kovar" et les isolants en alumine. Les soufflets sont en alliage métallique "Hastelloy" ou "Nimonic", afin de conserver leurs caractéristiques mécaniques aux températures élevées.

Enfin, le capteur 1 est relié au reste de l'appareil de mesure de l'invention par l'intermédiaire du câble triaxial 11 : la gaine métallique externe 20 de ce câble est soudée à la partie arrière 6b du manchon interne 6, la gaine métallique interne 21 du câble est soudée à la portion arrière 12b$_2$ du manchon interne 12, et l'âme 22 du câble est soudée à la partie postérieure 16b de l'élément sensible 16.

Au cours de l'assemblage des différents organes du capteur 1 et de leurs liaisons avec le câble triaxial 11, les soufflets 15 et 17 sont précomprimés partiellement, par exemple à environ 50 % de leurs possibilités de déformation.

Dans le cas où le capteur doit être utilisé dans des machines dans lesquelles règnent des pressions importantes, des orifices (non représentés) peuvent être prévus en différents emplacements appropriés (par exemple dans l'élément sensible 16 et le manchon interne 12) pour que les diverses chambres constituées au sein du capteur soient soumises à la pression ambiante.

La structure du capteur représenté à la figure 1 est une structure triaxiale dans laquelle le manchon externe 6 est mis au potentiel de la masse par l'intermédiaire de la gaine externe 20 du câble 11, constituant une cage de Faraday isolant l'intérieur du capteur vis-à-vis des perturbations de champs électromagnétiques extérieurs, et dans laquelle le manchon interne 12 et l'élément sensible 16 sont portés au même potentiel électrique par l'intermédiaire de la gaine interne 21 et de l'âme 22 du câble 11 réunies au même potentiel comme cela apparaîtra plus loin.

Le fait d'avoir entouré l'élément sensible 16 d'un manchon 12 porté au même potentiel que lui permet d'éliminer toute capacité parasite entre l'élément sensible 16 et les organes métalliques à potentiels différents qui l'entourent. On s'affranchit du même coup de toute modification de telles capacités parasites sous l'action de variations dimensionnelles différentielles en fonction de la température.

En outre, l'usage d'un câble de liaison triaxial 11 permet de s'affranchir de la capacité parasite d'un câble coaxial ordinaire et des variations importantes de cette capacité parasite lorsque le câble est déformé, sachant que la capacité à détecter est plus petite environ 1/10 pF au maximum pour un jeu de 0,1 mm) que la capacité parasite       d'un câble coaxial ordinaire (environ 1 pF/cm, soit par exemple 2000 pF pour un câble de 2m).

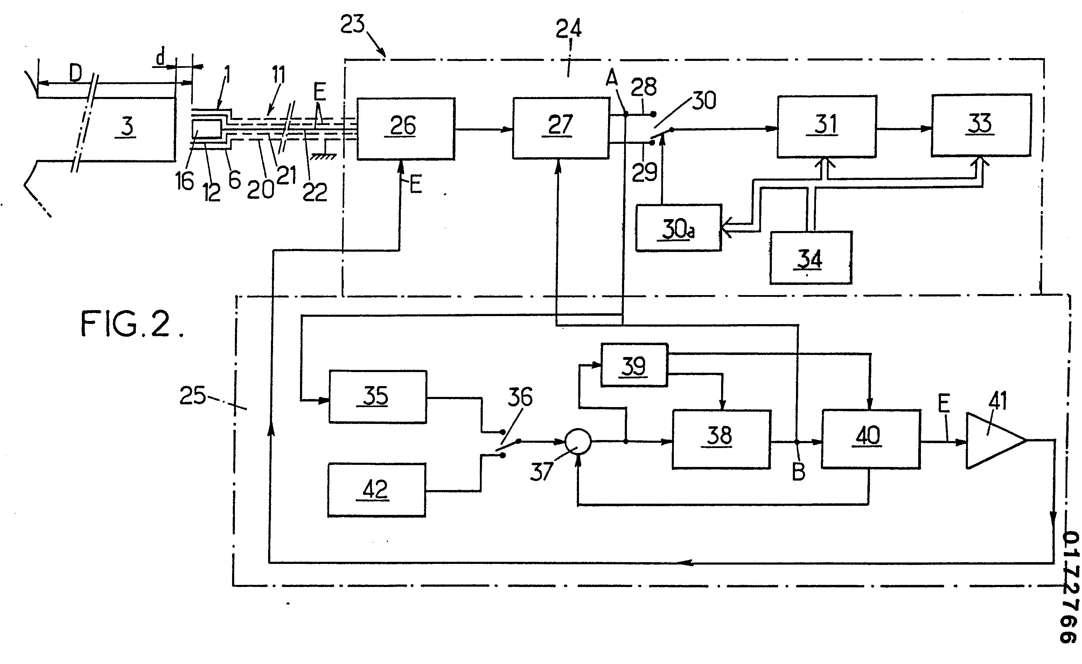

En se référant au schéma de la figure 2, on va maintenant expliquer de quelle manière peut être constitué et peut fonctionner un appareil de mesure agencé conformément à l'invention et incluant un capteur tel que celui de la fig. 1. Sur la figure 2, les principaux éléments déjà représentés à la fig. 1 ont conservé les mêmes références numériques.

Dans l'exemple représenté, on a supposé que le rotor de la machine comportait des parties saillantes 3 (par exemple des aubes de roue de turbine) dont l'extrémité libre se trouve à une distance $d$ (à mesurer) du carter (et donc du capteur 1), ces parties saillantes 3 étant séparées les unes des autres par des encoches dont le fond se trouve à la distance $\underline{D}$ du capteur. En outre, cette distance $\underline{D}$ est supposée très grande (approximativement la longueur de l'aube) vis-à-vis du jeu $\underline{d}$ (de l'ordre de quelques dizièmes de millimètre), comme cela apparaîtra plus loin.

La gaine externe 20 du câble 11 est reliée à la masse, tandis que la gaine interne 21 et l'âme 22 du câble 11, portées au même potentiel , sont connectées à un dispositif électronique de traitement de signal et de commande du capteur 23, qui comporte un sous-ensemble de traitement de signal 24 et un sous-ensemble de commande du capteur 25.

Lorsque l'extrémité d'une aube 3 (supposée être au potentiel de masse ) se trouve en regard de la face frontale de l'élement sensible 16 du capteur 1, les deux surfaces en regard constituent les armatures d'un condensateur dont la capacité est :

$$C = k \frac{S}{d}$$

où  S est l'aire des surfaces en regard

k est la permittivité du milieu interélectrodes (en principe de l'air)

et $\underline{d}$ la distance à mesurer.

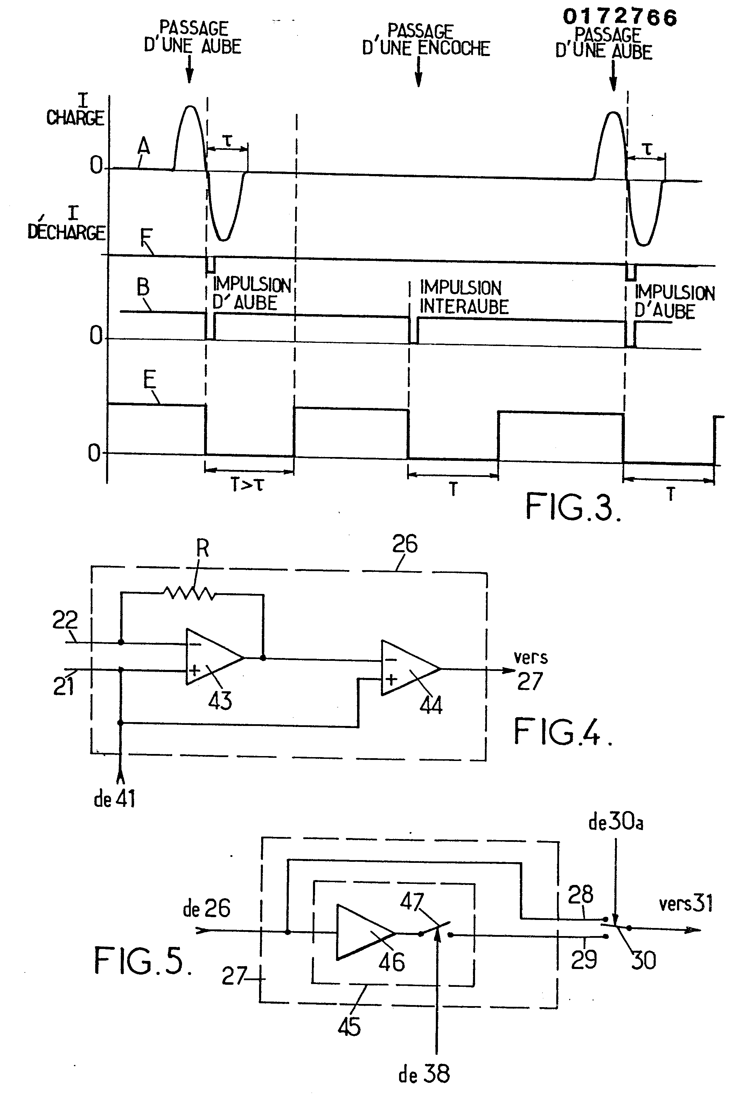

Si à ce moment, l'élément sensible 16 du capteur 1 est convenablement polarisé d'une manière qui sera indiquée plus loin, le condensateur ainsi formé se charge. Comme représenté à la figure 3 (courbe A), le courant de charge croît, passe par un maximum, puis décroît et s'annule lorsque le condensateur est chargé. L'amplitude de ce courant de charge dépend de la vitesse de passage de l'aube 3 devant le capteur 1, mais la charge électrique accumulée dans le condensateur est indépendante de cette vitesse. De ce fait, si,lorsque le courant de charge est revenu à zéro, on connecte le condensateur sur un circuit de décharge approprié, il va se décharger en donnant naissance à un courant de décharge dont l'amplitude maximale est fonction de la capacité et donc également de la distance $d$ dont on cherche à connaître la valeur.

Pour que la mesure du jeu $d$ soit fiable, répétitive et précise, il faut supprimer toutes les perturbations d'ordre thermique, dues au vieillissement des composants, etc. A cet effet, chaque mesure effectuée lors du passage d'une aube 3 en regard du capteur 1 est suivie d'une mesure identique effectuée lors du passage d'une encoche en regard du capteur ; dans ce cas, la distance $D$ est supposée suffisamment grande pour que la capacité correspondante du condensateur puisse être considérée comme nulle. En faisant la différence entre les deux valeurs successivement trouvées, on élimine les erreurs dues aux perturbations d'origine électronique communes aux deux mesures, et on en déduit la valeur $d$.

A cet effet, le sous-ensemble de traitement du signal 24 comprend un circuit 26 de détection du maximum du courant de décharge aux entrées duquel sont connectées l'âme 22 et la gaine interne 21, portées au même potentiel du câble 11.

La sortie du circuit de détection 26 est raccordée à un circuit séparateur 27 qui comporte deux sorties; sur l'une 28 est dirigé le signal délivré par le circuit 26 lors du passage d'une aube en regard du capteur, et sur l'autre 29 est dirigé le signal délivré par le circuit 26 lors du passage d'une encoche en regard du capteur.

Les deux sorties du circuit séparateur 27 sont raccordées aux deux bornes d'un commutateur 30 dont le contact mobile est raccordé à l'entrée d'un circuit de calcul 31 qui effectue la différence entre les deux valeurs qui lui sont successivement fournies quand le commutateur 30, sous l'action d'un circuit de commande 30a, connecte successivement son entrée sur les sorties 28 et 29 du circuit séparateur 27. La valeur différentielle ainsi trouvée fournit, par un étalonnage approprié, la valeur d qui est alors affichée par des moyens d'affichage 33.

Un circuit de gestion 34, convenablement commandé et programmé, assure la gestion séquentielle appropriée du circuit de commande 30a, du circuit calculateur 31 et des moyens d'affichage 33.

Le cycle de détection et de traitement du signal qui vient d'être décrit doit être répété pour chaque passage d'une aube en regard du capteur et pour chaque passage d'une encoche en regard du capteur, la détection devant alors de préférence être effectuée sensiblement au milieu de l'intervalle entre deux aubes consécutives, et ce avec des rapidités de traitement des signaux qui varient en fonction de la fréquence N de passage des aubes, autrement dit en fonction de la vitesse de rotation de la machine.

Pour commander cycliquement le capteur de façon appropriée, le sous-ensemble 25 de commande du capteur comporte un circuit 35 de fin de charge du condensateur qui détecte le retour à zéro du courant de charge dans le condensateur, chaque apparition dudit courant de charge et donc son annulation correspondant au passage d'une aube en regard du capteur (signal F, fig. 3). Le circuit 35 reçoit sur son entrée une information en provenance de la sortie 28 du séparateur 27 déjà mentionné.

La sortie du circuit 35 est connectée à une borne d'un commutateur 36 dont le contact fixe est relié à l'entrée d'un circuit de blocage 37. La sortie du circuit de blocage 37 est reliée à l'entrée d'un générateur d'impulsions 38 ainsi qu'à l'entrée d'un convertisseur fréquence-tension 39 dont une sortie est connectée à une entrée auxiliaire du générateur d'impulsions 38.

Le convertisseur fréquence-tension assure la génération d'une tension proportionnelle à la vitesse de rotation du rotor, c'est-à-dire proportionnelle au nombre des impulsions générées par le circuit 35 à chaque passage à zéro du courant de charge du condensateur.

Le générateur d'impulsions 38 engendre, d'une part, une impulsion négative à chaque impulsion arrivant sur son entrée en provenance du circuit 35 ; autrement dit, la tension de polarisation est annulée au moment où le courant de charge du condensateur est lui-même annulé. Cette impulsion négative correspond au passage d'une aube en regard du capteur ("impulsion d'aube"). Le générateur d'impulsions 38 engendre, d'autre part, à partir de l'information fournie par le convertisseur fréquence-tension 39, une impulsion négative (c'est-à-dire une annulation de la tension de polarisation) supplémentaire sensiblement au milieu de l'intervalle entre deux impulsions d'aube, cette impulsion supplémentaire correspondant par principe au passage d'une encoche en regard du capteur ("impulsion interaube" ou "impulsion d'encoche") [signal B, fig. 3].

La sortie du générateur 38 est connectée à l'entrée d'un circuit 40 de mise en forme des impulsions qui est agencé pour assurer aux impulsions négatives (d'aube et d'encoche) une durée T au moins égale au temps $\tau$ de décharge du condensateur. Le réglage de la durée des impulsions est asservi à l'information de vitesse fournie par une seconde sortie du convertisseur 39 et appliqué à une entrée auxiliaire du circuit 40. En outre, une sortie auxiliaire du circuit 40 est raccordée à une entrée de commande du circuit de blocage 37 afin que soit assuré le blocage de l'entrée du circuit 37 pendant la génération de l'impulsion supplémentaire interaube par le générateur 38, afin que la valeur de tension fournie par le convertisseur 39 ne soit pas modifiée par l'apparition de ces impulsions supplémentaires. De plus, le circuit 40 de mise en forme maintient l'amplitude de la tension de polarisation à une valeur constante afin que les mesures ne soient pas affectées par des variations de cette tension.

Enfin, la sortie du circuit de mise en forme 40 est connectée à l'entrée d'un amplificateur 41 ayant une sortie sous très basse impédance qui est reliée au capteur 1 à l'entrée du circuit de détection 26, comme cela sera indiqué ci-après (signal E, fig. 3).

On notera que, sur la seconde borne du commutateur 36, est connectée la sortie d'un générateur d'impulsions 42 apte, au cours d'une phase d'étalonnage de l'appareil, à générer des impulsions simulant le passage alterné d'aubes et d'encoches.

Pour résumer ce qui précède, l'appareil fonctionne sur le principe de l'application d'une tension de polarisation continue, d'amplitude fixée, à l'élément sensible du capteur 1 avant le passage, en regard, de chaque aube et approximativement du milieu de chaque encoche. Après la charge du condensateur et annulation du courant de charge, la tension de polarisation est annulée et la décharge du condensateur est déclenchée. La tension de polarisation reste nulle pendant un temps T suffisant pour que la décharge du condensateur soit complète, ce temps étant lui-même ajusté automatiquement en fonction de la vitesse de rotation du rotor. Le même phénomène est réalisé pour chaque encoche par génération artificielle d'impulsions correspondant sensiblement au milieu de chaque encoche.

En se référant maintenant aux figures 4 à 6, on va décrire un mode de réalisation de certaines des fonctions qui viennent d'être énoncées.

La figure 4 montre un mode de réalisation du circuit 26 de la figure 2, circuit qui assure la détection des courants de charge et de décharge du condensateur ainsi que l'application du potentiel adéquate (+ V ou O) sur l'élément sensible du capteur 1.

Le circuit 26 comporte un premier amplificateur opérationnel 43 dont l'entrée inverseuse est connectée à l'âme 22 du câble triaxial 11, et donc est reliée à l'élément sensible 16 du capteur 1. Une résistance de contre-réaction R est connectée entre l'entrée inverseuse et la sortie de l'amplificateur 43 sert de charge pour la capacité à mesurer (constante de temps $\tau$ =Rc). En l'absence de condensateur l'amplificateur 43 a un gain unité pour le signal de polarisation présent sur l'entrée inverseuse 21. La sortie de l'amplificateur 43 est connectée à l'entrée inverseuse d'une second amplificateur opérationnel et fonctionnant en sommateur.

Par ailleurs, les entrées non inverseuses des amplificateurs opérationnelles 43 et 44 sont connectées à la sortie de l'amplificateur 41 à sortie sous basse impédance.

Enfin, ces mêmes entrées sont reliées à la gaine interne 21 du câble triaxial 11, et donc au manchon interne 12 du capteur 1.

Le principe de fonctionnement de ce circuit consiste à comparer le signal de polarisation tel que délivré par l'amplificateur 41 (fronts de descente et de montée verticaux) avec le même signal ayant subi l'influence de la charge du condensateur. Dans le cas où cette charge est nulle (présence d'une encoche en regard du capteur), le signal en sortie de l'amplificateur 43 est identique au signal de polarisation ; la différence de ces signaux effectués par le sommateur 44 fournit un signal de sortie nul. Par contre, dans le cas où le condensateur est chargé (passage d'une aube en regard du capteur), les fronts de descente et de montée du signal de sortie de l'amplificateur 43 se trouvent retardés (ou amortis) en fonction de l'énergie accumulée dans le condensateur ; la différence effectuée par le sommateur 44 fait apparaître en sortie une impulsion positive correspondant au front de descente suivie d'une impulsion négative correspondant au front de montée.

La figure 5 montre un mode de réalisation du circuit séparateur 27. Ce circuit comprend essentiellement un échantillonneur-bloqueur 45, constitué par un amplificateur 46 suivi d'un interrupteur commandé 47 dont l'entrée de commande est raccordée à la sortie du générateur 38. La sortie de l'interrupteur commandé est raccordée à la sortie 29 du circuit séparateur 27, tandis que l'autre sortie 28 du circuit 27 est directement connectée à l'entrée dudit circuit 27.

Le commutateur 30 est commuté sur la sortie 28 à chaque passage d'une aube en regard du capteur, sous la commande du circuit 30a et du circuit 34 dont le fonctionnement est asservi à la vitesse de passage des aubes. A chaque passage d'une encoche, le commutateur 30 est commuté sur la sortie 29 sur laquelle l'interrupteur 47, commandé par le générateur d'impulsions 38, est fermé pour laisser passer les signaux positifs correspondant à la décharge du condensateur après le passage d'une encoche, tandis qu'il est fermé pour bloquer les signaux négatifs. Le circuit de calcul 31 ne reçoit donc que les signaux correspondant aux courants de décharge du condensateur correspondant successivement au passage d'une aube, puis au passage d'une encoche.

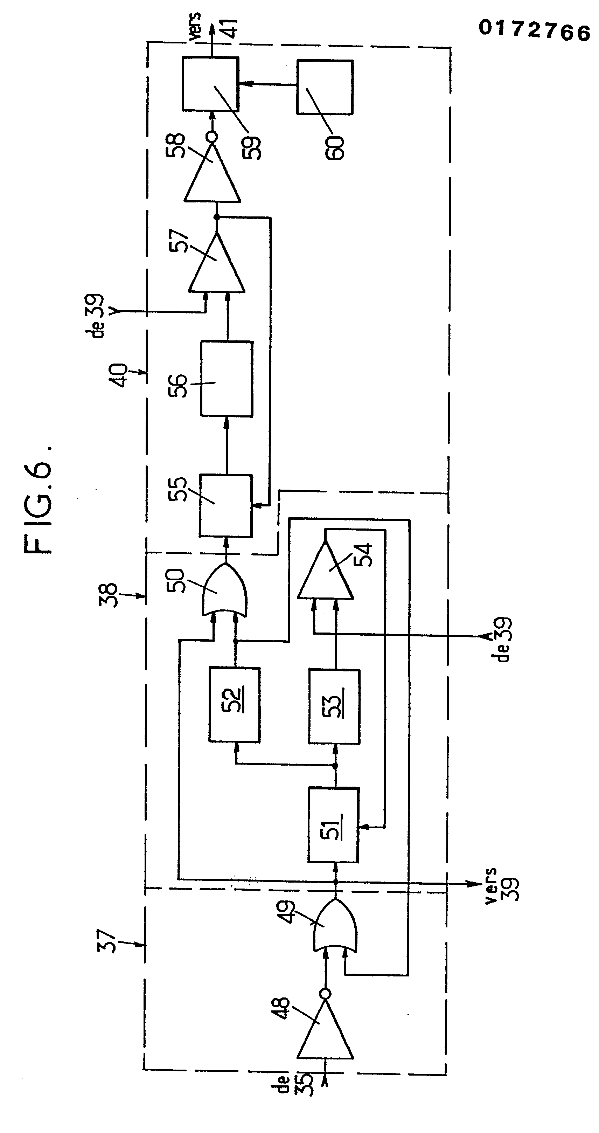

La figure 6 représente un mode de réalisation du circuit de blocage 37, du générateur d'impulsions 38 et du circuit 40 de mise en forme de ces impulsions.

Les impulsions provenant du circuit 35 de détection du passage à zéro du courant de charge du condensateur sont appliquées à un inverseur 48 dont la sortie est reliée à une entrée d'une porte OU 49 constituant l'élément de blocage assurant que le convertisseur fréquence-tension 39 ne soit sensible qu'aux impulsions d'aubes. La sortie de la porte OU 49 est connectée à une entrée d'une seconde porte OU 50 constituant le circuit de sortie du générateur 38. La sortie de la porte OU 49 est également appliquée à l'entrée du convertisseur fréquence-tension 39.

Pour générer une impulsion supplémentaire (impulsion interaube) située sensiblement au milieu de l'intervalle de deux impulsions d'aube, un circuit d'hologe 51, dont l'entrée est reliée à la sortie de la porte OU 49, a sa sortie connectée à l'entrée d'une bascule monostable 52 de remise en forme des impulsions dont la sortie est reliée à l'autre entrée de la porte OU 50 et à l'autre entrée de la porte OU 49. La sortie du circuit 51 est également reliée à l'entrée d'un générateur de rampes 53 dont la sortie est connectée à l'entrée inverseuse d'un comparateur 54 dont l'entrée non inverseuse est connectée à l'une des sorties du convertisseur fréquence-tension 39. La sortie du comparateur 54 est raccordée à l'entrée de déclenchement du circuit d'horloge 51.

Le fonctionnement de ce circuit consiste à provoquer la génération d'une rampe ayant une pente préétablie telle que, comparée avec le signal analogique contenant l'information de vitesse de rotation du rotor, la coïncidence survienne sensiblement au milieu de l'intervalle entre deux impulsions d'aubes. Le signal de coïncidence engendré alors par le comparateur 54 commande l'émission d'une impulsion supplémentaire par le circuit d'horloge 51 laquelle, une fois mise en forme par la bascule monostable 52, parvient à la porte OU 50. Celle-ci délivre donc des impulsions d'aube provenant directement de la sortie de la porte OU 49 entrelacées d'impulsions interaube créées "artificiellement" correspondant au passage d'une encoche.

Ces impulsions sont ensuite traitées par le circuit de mise en forme 40. La sortie de la porte OU 50 est reliée à l'entrée d'un circuit d'horloge 55 dont la sortie commande un générateur de dent de scie 56. La sortie de celui-ci est reliée à l'entrée inverseuse d'un comparateur 57 dont l'entrée non inverseuse est connectée à l'autre sortie du convertisseur fréquence-tension 39. La sortie du comparateur 57 est connectée à l'entrée de déclenchement du circuit d'horloge 55 et également à l'entrée d'un circuit inverseur 58, lequel commande un circuit 59 de régulation d'amplitude des impulsions ajustable par un circuit de commande 60. La sortie du circuit 59, qui constitue la sortie du circuit de mise en forme 40, est reliée à l'entrée de l'amplificateur 41.

Les circuits 55, 56 et 57 asservis à l'information de vitesse fournie par le convertisseur 39, constitue un dispositif de réglage automatique, en fonction de la vitesse de rotation du rotor, de la largeur des impulsions négatives correspondant à l'annulation de la tension de polarisation, de manière que la largeur T de ces impulsions négatives soit toujours inférieure au temps de décharge τ du condensateur quelle que soit la vitesse de passage des aubes.

Bien entendu, les circuits qui viennent d'être expliqués en référence aux figures 4 à 6 ne sont indiqués qu'à titre d'exemple ; d'autres modes de réalisation sont possibles sans que le mode de fonctionnement de l'appareil de mesure s'en trouve modifié.

22

Les autres circuits inclus dans le dispositif 23 de commande et de traitement des signaux n'offre aucune particularité particulière et leur réalisation est à la portée de l'homme de l'art.

La description qui précède concerne un appareil conçu pour détecter le jeu entre le stator et le rotor d'une machine dans le cas où le rotor comporte des parties saillantes (aubes) alternant avec des encoches (zones inter-aubes) ; cet appareil met en oeuvre un procédé de mesure différentielle qui permet de s'affranchir des erreurs dues aux circuits, car c'est dans ce cas que l'invention semble devoir trouver ses applications les plus intéressantes.

Toutefois, dans le cas où une précision de mesure aussi élevée n'est pas recherchée, ou bien lorsque le rotor présente une surface approximativement lisse, il est possible de réaliser l'appareil sous une forme simplifiée permettant d'effectuer des mesures directes (c'est-à-dire non différentielles) ; la réalisation de cet appareil simplifié est à la portée de l'homme de l'art compte tenu des indications détaillées fournies plus haut sur l'appareil complet.

Comme il va de soi et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

23

## REVENDICATIONS

1. Procédé pour effectuer la mesure dynamique, sur une machine tournante en fonctionnement, du jeu ($\underline{d}$) entre les faces en regard du rotor (3) et du stator (2) de cette machine, notamment du jeu entre l'extrémité d'une aube tournante et le carter d'une turbomachine, ce procédé étant basé sur la détection de la charge d'un condensateur constitué par une surface conductrice (16$\underline{a}$) d'un capteur (1) fixé dans le stator (2) en regard du rotor et une surface conductrice (5) du rotor (3) susceptible d'être située en regard de la précédente, caractérisé en ce qu'il comprend les étapes qui suivent :
a) on applique sur la surface de l'élément sensible (16) du capteur (1) une tension de polarisation,
b) on mesure (26) le courant de charge du condensateur. constitué par lesdites deux surfaces du rotor et du stator lorsque la surface du rotor vient à passer en regard de la surface du capteur fixé dans le stator et on détecte la fin de la charge du condensateur,
c) on détecte (35) l'instant du retour à zéro dudit courant de charge, on annule (38 à 41) la tension de polarisation du capteur, et on provoque la décharge du condensateur,
d) on mesure (26) l'amplitude maximale du courant de décharge du condensateur qui est représentative de la distance séparant les deux surfaces en regard,
e) et on en déduit (31) la distance séparant les deux surfaces en regard du rotor et du stator.

2. Procédé selon la revendication 1, le rotor de la machine tournante comportant une alternance d'encoches et de parties saillantes., la profondeur des encoches (considérée par rapport à l'extrémité libre des parties saillantes) étant relativement grande par rapport à la distance à mesurer séparant l'extrémité libre des parties saillantes et le stator,
caractérisé en ce qu'entre les étapes d) et e) on détermine successivement les charges du condensateur respectivement lorsqu'une partie saillante puis une encoche du rotor sont situées en regard de la surface du capteur fixé dans le stator,

en ce qu'on effectue la différence entre les deux valeurs détectées,

et en ce qu'on considère ladite différence comme étant la capacité vraie du condensateur formé par l'extrémité de la partie saillante du rotor et la surface du capteur fixé dans le stator,

ce grâce à quoi on s'affranchit des erreurs introduites par l'appareil lors de la mesure et du traitement des signaux lorsque la profondeur des encoches est suffisamment grande pour que la capacité correspondante puisse être considérée comme nulle.

3. Appareil pour effectuer la mesure dynamique, sur une machine tournante en fonctionnement, du jeu (d) entre les faces en regard du rotor (5) et du stator (4) de cette machine, notamment du jeu entre l'extrémité d'une aube tournante et le carter d'une turbomachine, cet appareil comportant un capteur de proximité (1) du type capacitif disposé dans le stator dans une position fixe prédéterminée vis-à-vis du rotor et connecté électriquement à un dispositif électronique (23) de commande et de traitement du signal électrique fourni par le capteur, caractérisé en ce que le capteur (1) comprend :

- un manchon externe (6) constitué en un matériau électriquement conducteur, fixé dans le stator,

- un manchon interne (12) constitué en un matériau électriquement conducteur et s'étendant coaxialement à l'intérieur du manchon externe en étant électriquement isolé de celui-ci,

- et un élement sensible (16) constitué en un matériau électriquement conducteur et s'étendant coaxialement à l'intérieur du manchon interne (12) en étant électriquement isolé de celui-ci, les extrémités antérieures du manchon externe, du manchon interne et de l'élément sensible étant alignées entre elles et affleurant la face (4) du stator tournée vers le rotor,

le manchon externe (6), le manchon interne (12) et l'élément sensible (16) étant respectivement connectés à une gaine externe (20) électriquement conductrice, à une gaine interne (21) électriquement conductrice isolée de la précédente, et à une âme (22) électriquement conductrice isolée de la précédente d'un câble triaxial (11) de liaison avec le dispositif de commande et de traitement du signal (23).

4. Appareil selon la revendication 3, caractérisé en ce que le manchon interne (12) et l'élément sensible (16) sont chacun constitués de deux parties distantes l'une de l'autre axialement, en ce que la partie postérieure $(12b_2)$ du manchon interne et la partie postérieure $(16\underline{b})$ de l'élément sensible sont respectivement connectées à la gaine interne (21) et à l'âme 22 du câble triaxial (11), en ce que la partie antérieure $(12\underline{a})$ du manchon interne et la partie antérieure $(16\underline{a})$ de l'élément sensible ont leurs faces antérieures respectives affleurant la face (4) susmentionnée du stator, et en ce que les parties postérieure $(12b_2)$ et antérieur $(12\underline{a})$ du manchon interne (12) sont réunies l'une à l'autre par un soufflet tubulaire (15) et les parties postérieure $(16\underline{b})$ et antérieure $(16\underline{a})$ de l'élément sensible (16) sont réunies l'une à l'autre par un soufflet tubulaire (17), ces deux soufflets (15, 17) étant constitués en un matériau électriquement conducteur et étant partiellement comprimés en position de montage.

5. Appareil selon la revendication 4, caractérisé en ce que des manchons isolants (14, 19) sont interposés, d'une part, entre le manchon externe (6) et la partie antérieure $(12\underline{a})$ du manchon interne (12) et, d'autre part, entre les parties antérieures $(12\underline{a}, 16\underline{a})$ du manchon

interne (12) et de l'élément sensible (16).

6. Appareil selon la revendication 5, caractérisé en ce que les différentes pièces emboîtées les unes dans les autres (manchon externe, manchons isolants, parties antérieures du manchon interne et de l'élément sensible) possèdent, vers leur extrémité antérieure, une ou des surfaces tronconiques (8, 13, 18) de portée mutuelle servant de butée en direction de l'avant.

7. Appareil selon l'une quelconque des revendications 3 à 6, caractérisé en ce que le manchon externe possède un épaulement périphérique (7) sur sa surface extérieure apte à coopérer avec un épaulement complémentaire du stator servant de butée en direction de l'avant.

8. Appareil selon l'une quelconque des revendications 3 à 7, caractérisé en ce que les assemblages entre les pièces constituées en un matériau électriquement conducteur sont réalisés par soudure sous atmosphère de gaz rare (sous argon notamment) ou par bombardement électronique.

9. Appareil selon l'une quelconque des revendications 1 à 8, caractérisé en ce que les matériaux électriquement conducteurs ou isolants constitutifs des pièces de l'appareil possèdent des coefficients de dilatation thermique aussi voisins que possible.

10. Appareil selon l'une quelconque des revendications 3 à 9, caractérisé en ce que le dispositif (23) de commande et de traitement du signal fourni par le capteur comprend :
A) un circuit (24) de traitement du signal fourni par le capteur comportant :

a) un circuit (26) de détection du maximum du courant de décharge dans le capteur, ce circuit étant connecté à l'élément sensible (16) du capteur (1),

b) un circuit calculateur (31), connecté au précédent, pour déterminer la distance entre le capteur et une zone

27

prédéterminée de la surface du rotor à partir de ladite valeur maximale détectée du courant de décharge,

e) et un circuit d'affichage (33), connecté au précédent, pour afficher la distance détectée ;

et

B) un circuit (25) de commande du capteur comprenant :

a) un circuit (26) de détection du courant de charge dans le capteur, connecté audit capteur,

b) un circuit (35) de détection du passage à zéro du courant de charge, connecté au précédent,

c) un circuit (39) de détection de la vitesse de rotation du rotor,

d) un circuit (38) de détection d'intervalle entre les zones prédéterminées de la surface du rotor,

e) un circuit de polarisation (38, 40) dont les entrées sont connectées aux trois circuits précédents, pour interrompre la tension de polarisation du capteur à partir du passage à zéro du courant de charge pour une durée au moins égale au temps de décharge du condensateur, et

f) un amplificateur (41), connecté au circuit précédent, possédant une sortie à basse impédance raccordée à l'élément sensible (16) du capteur (1) pour fournir à celui-ci la tension de polarisation appropriée.

11. Appareil selon la revendication 10, le rotor de la machine tournante comportant une alternance d'encoches et de parties saillantes (zones prédéterminées susmentionnées) la profondeur des encoches (considérées par rapport à l'extrémité libre des parties saillantes) étant relativement grande par rapport à la distance à mesurer séparant l'extrémité libre des parties saillantes et le stator, caractérisé en ce que, en outre, le circuit de traitement du signal fourni par le capteur comporte en outre un circuit séparateur de signaux (27), connecté au circuit (26) de détection du maximum du courant de décharge dans le capteur, pour séparer les signaux électriques correspondant, d'une part, à la décharge du condensateur formé par l'élément sensible du capteur et l'extrémité d'une partie saillante du rotor et, d'autre part, à la décharge du condensateur formé par l'élément sensible du capteur et le fond d'une encoche du rotor, et en ce que le circuit calculateur (31) est connecté à la sortie du circuit séparateur (27), pour déterminer la différence entre les deux valeurs maximales des courants de décharge correspondant respectivement à une partie saillante et à une encoche du rotor et pour déterminer la distance entre le capteur et la partie saillante du rotor à partir de la susdite différence.

FIG.1.

1/4

0172766

FIG.2.

PASSAGE
D'UNE AUBE

PASSAGE
D'UNE ENCOCHE

**0172766**
PASSAGE
D'UNE AUBE

I
CHARGE

0

A

τ

τ

I
DÉCHARGE

F

B

IMPULSION
D'AUBE

IMPULSION
INTERAUBE

IMPULSION
D'AUBE

0

E

0

T>τ

T

T

FIG.3.

R

26

22

21

43

44

vers
27

de 41

FIG.4.

de 30a

de 26

47

28

vers31

45

46

29

30

FIG.5.

27

de 38

# FIG.6.

vers
41

4/4

de
35

vers
39

de 39

de 39

0172766

Office européen des brevets

# RAPPORT DE RECHERCHE EUROPEENNE

**0172766**
Numéro de la demande

EP 85 40 1500

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.⁴) |
|---|---|---|---|
| D,A | US-A-4 063 167 (AVCO CORP.)<br><br>* En entier *<br><br>--- | 1,2,3,4,5,10,11 | G 01 B 7/14 |
| A | GB-A-2 073 427 (AVCO CORP.)<br><br>* En entier *<br><br>--- | 1,2,3,4,5,8,9 | |
| A | US-A-3 504 279 (RELIANCE ELECTRIC AND ENGINEERING CO.)<br><br>* En entier *<br><br>--- | 1,2,3,7,10,11 | |
| A | GB-A-2 071 852 (ROLLS ROYCE LTD.)<br><br>* En entier *<br><br>--- | 1,2,3,4,5,6,10,11 | |
| A | FR-A-2 521 719 (SNECMA)<br><br>* En entier *<br><br>--- | 1,2,3,10,11 | |
| A | GB-A-1 026 353 (ASSOCIATED ELECTRICAL INDUSTRIES LTD.)<br><br>* En entier *<br><br>---     -/- | 1,2,3,4,5,6,7 | |

DOMAINES TECHNIQUES RECHERCHES (Int. Cl.⁴)

G 01 B 7/00
F 01 D 17/00

Le présent rapport de recherche a été établi pour toutes les revendications

| Lieu de la recherche | Date d'achèvement de la recherche | Examinateur |
|---|---|---|
| LA HAYE | 24-10-1985 | BROCK T.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

**RAPPORT DE RECHERCHE EUROPEENNE**

Office européen
des brevets

**0172766**
Numéro de la demande

EP 85 40 1500

Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | GB-A- 832 242 (POWER JETS LTD.) <br><br> * Page 1, ligne 11 - page 2, ligne 32; figures 1-3 * <br><br> ----- | 1,2,3, 4,5,6, 7 | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 24-10-1985 | BROCK T.J. |